# EUROPEAN PATENT SPECIFICATION

(11) **EP 1 653 318 B1**
(45) Date of publication and mention of the grant of the patent: **28.04.2010**
(21) Application number: 05109680.8
(22) Date of filing: 18.10.2005
(51) Int. Cl.: G06F 1/00

(54) **Document stamping antivirus manifest**
Antivirus-Manifest für Dokumentausdruck
Manifeste antivirus d'estampage de document

(30) Priority: 29.10.2004 US 976567
(43) Date of publication of application: 03.05.2006
(73) Proprietor: Microsoft Corporation, Redmond, WA 98052 (US)
(72) Inventor: Costea, Mihai, Redmond, WA 98052 (US)
(74) Representative: Grünecker, Kinkeldey, Stockmair & Schwanhäusser Anwaltssozietät

(56) References cited:
- EP-A- 1 408 393
- US-A- 5 572 590
- US-A1- 2003 145 213
- US-A1- 2004 002 882
- US-B1- 6 763 466
- "Microsoft Knowledge Base" [Online] 29 September 2004 (2004-09-29), MICROSOFT CORPORATION , XP007908896 Retrieved from the Internet: URL:http://web.archive.org/web/20040929060 550/http://www.microsoft.com/whdc/driver/f ilterdrv/default.mspx> [retrieved on 2009-05-19]

## Description

### FIELD OF THE INVENTION

The present invention generally relates to computer virus detection, and more particularly, to virus scanning.

### BACKGROUND OF THE INVENTION

Anti-virus (AV) programs are designed to prevent computer viruses from infecting files that reside on a file system. Generally, AV programs sit between a user, or the user's applications, and a computer's file system, to ensure that files infected with computer viruses are not written to the file system. If infected files already reside on the file system, an AV program helps to ensure that they are not executed or copied to other computers.

AV programs scan computer files for known viruses by comparing each file to a list of "virus signatures" that are stored in "virus signature files." The scanning can be done upon request of a user, as files are accessed on a mass storage device, such as by an application, or on a scheduled basis. Therefore, virus scanning is a resource intensive (CPU and disk I/O) and time-consuming task, especially in the case of access/real-time scanning. Oftentimes, a user's file-open request must be delayed until the file can be scanned and possibly cleaned. This resource consumption can lead to a degradation of a computer's overall performance and slow response times for users.

Various AV scanning techniques are currently used in the industry today. The techniques include the concept of saving a set of parameters, an "AV state," for each of the files as of the last virus scan so that once a file has been scanned and found free of infection, scanning should not be required again unless the file is modified. The parameters chosen for the AV state are those that may indicate the possibility of virus infiltration into a file, such as a file's length, a file checksum/flag, or the date of last file write operation.

One common AV scanning technique is to create an in-memory or on-disk cache containing the AV state for files that have been scanned during recent executions of the AV program. The cache is checked whenever a file is accessed or when a scheduled scan is due. If the file's AV state is in the cache, the AV state parameters for the file in the scan information cache are checked against the current parameters of the file. If the parameters match, a virus scan is not necessary. If the parameters do not match, or if the AV state for the file is not cached, then the file is scanned and the cache information is updated.

Another approach stores the AV state (often just a checksum/flag) in an external database that is then compared against the current values of the AV state parameters when the file is accessed. This technique is normally only effective if the AV state information is thoroughly secured against unauthorized changes.

The AV scanning techniques discussed above generally require the designers of the AV programs to understand the fundamental format of the files that need to be scanned. In particular, the AV program designers evaluate the files generated by various software applications, so that the designed AV programs may successfully scan the "file formats" generated by the applications. As the number of software applications increase, and therefore also the number of different file formats, the AV program designers have found that it is very difficult to stay abreast with the increasing number of file formats generated and used by software applications.

EP-A-1 408 393 relates to the selective detection of malicious computer code. A scanning engine generates a hash of a critical viral target region (CVTR) of a file and compares it to a stored hash of the critical viral target region. Even if the hashes are identical and the file has been scanned by the most recent version of the detection module, the scanning engine determines that the file is free of infection by an attacking agent. The determination of whether the file contains malicious code is performed by checking the hash of the critical viral target region CVTR. The CVTR refers to a region of a file that is usually changed when the file is infected with malicious code. A hash is a one-way function from a variable sized input to a fixed size output that is substantially collision free. The scanning engine comprises a group of modules that are loaded into the memory. The scanning engine identifies data to be checked for the presence of attacking regions, checks for the checking agent and response to a detected attacking agent. The scanning engine identifies particular files and/or memory locations to be checked for attacking agents. A storage includes executable files and a CVTR database. The CVTR database contains scanning information related to each of the executable files. The CVTR database preferably stores a CVTR region of each of the executable files, a file identifier and identifiers indicating the most recent version of the scanning engine applied to the file. An entry in a CVTR database includes a section storing hashes of one or more CVTR regions of the file. These hashes are generated when the scanning engine performs a complex scan of the file. The absence of change to any CVTR is a reliable indicator that an attacking agent has not inserted malicious code in the file.

US 2003/145213 A1 relates to a software virus detection. Proscribed code is identified, disabled and stripped. Code to be examined is intercepted and provided to the proscribed code scanner. The proscribed code scanner examines the code according to the scanner's configuration settings. These settings can include scanning for specific proscribed code or code segments, e.g. virus code, calculating hash codes of the code or code segment and then scanning a database of proscribed hash codes. If proscribed code is present in the examined code, the examined code is sent to a code reconstructor where it is reconstructed according to code templates. The code template provides file reconstruction according to the document structures stored within the template. Each template is specific according to the file type. The specific stored code template for any particular file is retrieved by initially examining file header information and, if necessary, other information within the body of the file. For example, the initial eight-byte identifier identifies a document as a Microsoft document. Once the template is retrieved, a reconstructor is able to break the file into its various data structures. For example, the Word document typically comprises several 512 byte blocks in sequential numbering. The header block contains information about and addresses to certain subsequent blocks which contain information about document properties. Other blocks comprise the Word document, which are called text blocks. By applying a template permitting reconstruction of the document's structure, it is possible to track and delete proscribed code. For example, proscribed code might potentially be broken into pieces throughout the Word document, and reassembled as the document is executed by Word upon opening. A Word template is constructed according to the typical Word document style, which then can be used to reconstruct the Word document without exposing the system to any proscribed code that might be contained. Once the template is called, the code or document is parsed by way of the reconstructor and the template. Macros in the reconstructed document are identified and, after identification, a repair component will then erase all macros in the documents by overwriting the infected area with nulls.

It is the object of the present invention to provide an improved method for facilitating the scanning of a file for virus infection.

This object is solved by the subject matter of the independent claims.

Preferred embodiments are defined in the dependent claims.

The exemplary embodiments of the present invention provide technology that generally makes scanning of computer related files more efficient. At a time a file is created, the application creating the file will generate and associate a stamp with the file. Alternatively, a stamp may generated and associated with an existing file by way of an application designed to identify address areas that may be susceptible to computer related viruses. The stamp includes the address locations of data that may be infiltrated by computer related viruses and/or malware. Using this stamp, an anti-virus program can quickly identify the specific parts of the file that should be scanned for virus infection. Other data in the file are ignored during the scanning process.

An exemplary method in accordance with the present invention includes scanning a file for computer related viruses in accordance with a stamp associated with the file, the stamp identifying address locations of the file that are susceptible to infection by computer related viruses.

Another exemplary method in accordance with the present invention includes creating a computer file having data associated therewith; evaluating the data associated with the computer file to determine data that may be corrupted by at least one computer related virus; and generating a stamp that includes at least one address location of the data that is determined as computer related virus corruptible.

Another exemplary embodiment formed in accordance with the present invention is an article of manufacture for use in programming a processor. The article of manufacture includes at least one computer readable storage device including at least one computer program embedded therein that causes the processor to perform a method according to the present invention, including the above described exemplary methods.

### BRIEF DESCRIPTION OF THE DRAWINGS

The foregoing aspects and many of the attendant advantages of this invention will become more readily appreciated as the same become better understood by reference to the following detailed description, when taken in conjunction with the accompanying drawings, wherein:
FIGURE 1 illustrates several computer systems that are coupled together through a network, such as a local area network (LAN) or the Internet;
FIGURE 2 illustrates an exemplary example of a computer system that may be used as a client device, a server device, or web server;
FIGURES 3 and 4 illustrate a system level overview of the operation of the exemplary embodiments of the present invention;
FIGURE 5 illustrates an exemplary body of a file stamp in accordance with an exemplary embodiment of the present invention;
FIGURE 6 illustrates a flowchart for creating a file that includes a stamp in accordance with an exemplary embodiment of the present invention; and
FIGURE 7 illustrates a flowchart of a process that may be used to scan files that include a stamp in accordance with an exemplary embodiment of the present invention.

### DESCRIPTION OF EXEMPLARY EMBODIMENTS

In the following detailed description of the exemplary embodiments of the present invention, reference is made to the accompanied drawings in which is shown, by way of illustration, exemplary embodiments of the present invention. These embodiments are described in sufficient detail to enable those skilled in the art to practice the present invention, and it is to be understood that other embodiments may be utilized and that logical, mechanical, electrical and other changes may be made without departing from the scope of the present invention. The following detailed description is, therefore, not to be taken in a limiting sense, and the scope of the present invention is defined only by the appended claims.

### Introduction

The following description is separated into several distinct sections. Foremost, an operating environment is disclosed and provides various hardware examples that the exemplary embodiments of the present invention may be implemented with. Next, a system level overview is disclosed and includes a discussion of an interaction of an anti-virus program with files, having a stamp according to an exemplary embodiment of the present invention, stored in a computer file system. Finally, various methods according to the embodiment of the present invention are disclosed. The figures are referred to in detail to aid comprehension of the embodiments of the present invention.

### Operating Environment

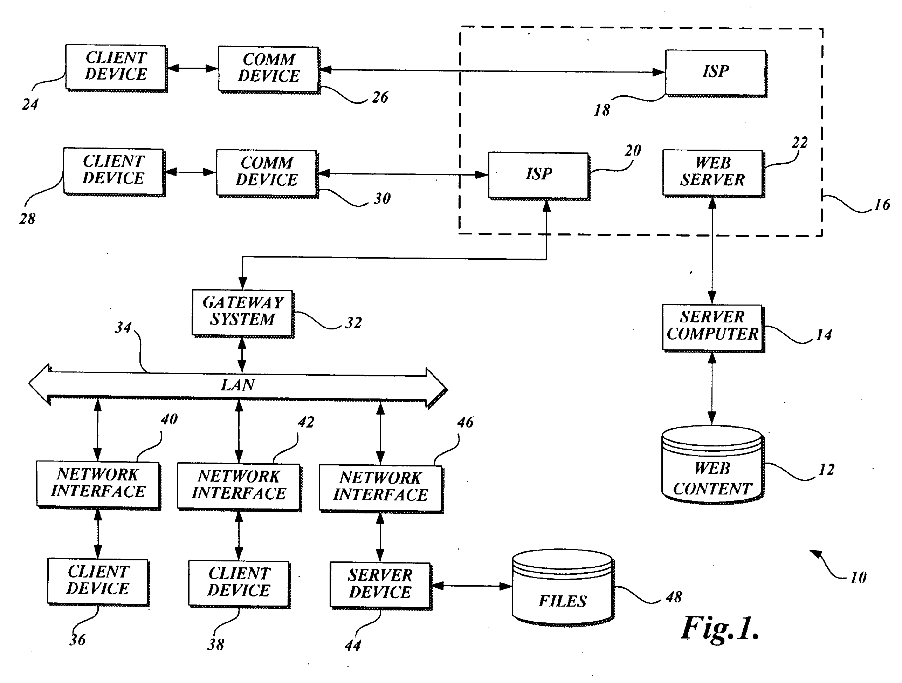

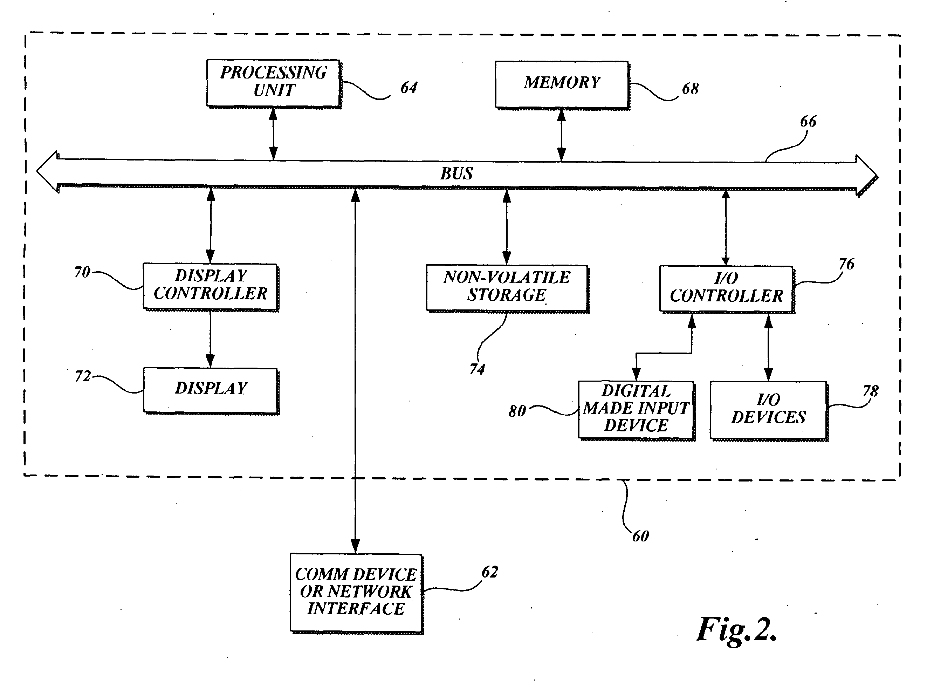

The following description of FIGURES 1 and 2 is intended to provide an overview of computer hardware and other operating components suitable for implementing the present invention, but it is not intended to limit the applicable environments in which the present invention may be practiced. One of ordinary skill in the art will immediately appreciate that the present invention may be practiced with other computer system configurations, including hand-held devices, multi-processor systems, microprocessor-based or programmable consumer electronics, network personal computers (PCs), mini computers, mainframe computers, and the like. The present invention may also be practiced in distributed computing environments where tasks are performed by remote processing devices that are linked through a communications network.

FIGURE 1 illustrates several computer systems 10 that are coupled together through a network 16, such as a local area network (LAN) or the Internet. The term "Internet" as used herein refers to a network of networks which uses certain protocols, such as the Transmission Control Protocol/Internet Protocol (TCP/IP), and possibly other protocols, such as the hypertext transfer protocol (HTTP) or hypertext markup language (HTML) documents that make up the World Wide Web (WWW). The physical connections of the Internet, the protocols and the communication procedures of the Internet are well known to those of ordinary skill in the art.

Access to the network 16 is typically provided by Internet service providers (ISPs), such as ISPs 18 and 20. Users on client systems, such as client computer devices 24, 28, 36, and 38 obtain access to the Internet through the Internet service providers, such as ISPs 18 and 20. Access to the Internet allows the users of the client computer devices to exchange information, receive and send e-mails, and view documents, such as documents which have been prepared in the HTML format. These documents are often provided by Web servers, such as a Web server 22 which is considered to be "on" the Internet. Often, these Web servers are provided by ISPs, such as the ISP 18.

The Web server 22 is typically at least one computer system which operates as a server computer system and is configured to operate with the protocols of the WWW. Optionally, the Web server 22 may be part of an ISP that provides access to the Internet for client devices. The Web server 22 is shown coupled to a server computer 14, which is coupled to Web content 12. The Web content 12 may be considered a media database. It will be appreciated that while two computer systems 22 and 14 are shown in FIGURE 1, the Web server 22 and the server computer 14 may be one computer system having different software components providing Web server functionality and server functionality.

The client computer devices 24, 28, 36 and 38 may each, with the appropriate Web browsing software, view HTML pages provided by the Web server 22. The ISP 18 provides Internet connectivity to the client device 24 through a communications device 26. The communications device 26 may be considered part of the client device 24. The client device 24 may be a PC, or other similar computer system. Similarly, the ISP 20 provides Internet connectivity for client devices 28, 36, and 38. The client device 28 is coupled to the ISP 20 through a communications device 30, while the client devices 36 and 38 are part of a LAN. The client devices 36 and 38 are coupled to a LAN bus 34 through network interfaces 40 and 42, which can be Ethernet network interfaces or other network interfaces. The LAN bus 34 is also coupled to a gateway computer system 32, which provides firewall and other Internet related services for the LAN. The gateway computer system 32 is coupled to the ISP 20 to provide Internet connectivity to the client devices 36 and 38. The gateway computer system 32 may be a conventional server computer system. Also, the Web server 22 may be a conventional server computer system.

Alternatively, as is well-known, a server device 44 can be directly coupled to the LAN bus 34 through a network interface 46 to provide files 48 and other services to the client devices 36 and 38, without the need to connect to the Internet through the gateway system 32.

FIGURE 2 illustrates an exemplary example of a computer system 60 that may be used as a client device, a server device, or Web server. It will also be appreciated that the computer system 60 may be used to perform many of the functions of an Internet service provider, such as the ISPs 18 and 107. The computer system 60 interfaces to external systems through a communications device or network interface 62. It is appreciated that the communications device or network interface 62 may be an integral part of the computer system 60. The interface 62 may be an analog modem, an ISDN modem, a cable modem, a token ring interface, or other such interfaces for coupling a computer system to other computer systems.

The computer system 60 includes a processing unit 64, which may be a conventional microprocessor such as an Intel® Pentium® microprocessor or a Motorola PowerPC® microprocessor. A memory 68 is coupled to the processor 64 via a bus 66. The memory 68 may be a dynamic random access memory (DRAM) and may also include static RAM (SRAM). The bus 66 couples the processor 64 to the memory 68, and also to a non-volatile storage 74 and to a display controller 70 and to an input/output (I/O) controller 76.

The display controller 70 controls in a conventional manner a display on a display device 72. The display of the display device 72 may be a cathode ray tube (CRT) or a liquid crystal display (LCD). Input/output devices 78 may include a keyboard, disk drives, printers, scanners, and other input and/or output devices, including a mouse or other pointing device. The display controller 70 and the I/O controller 76 may be implemented with conventional well-known technology.

A digital image input device 80 may be a digital camera which is coupled to the I/O controller 76 in order to allow images from the digital camera to be input into the computer system 60. The non-volatile storage 74 is often a magnetic hard disk, an optical disk, or other form of storage for large amounts of data. Some of this data is written, by a direct memory access process, into the memory 68 during execution of software in the computer system 60. One of ordinary skill in the art will immediately recognize that the term "computer-readable medium" includes any type of storage device accessible by the processing unit 64.

It is appreciated that the computer system 60 is just one example of many possible computer systems which may have different architectures. For example, PCs often have multiple buses, one of which may be considered to be a peripheral bus. A typical computer system will usually include a processor, a memory, and a bus coupling the memory to the processor.

It is also clear to those of ordinary skill in the art that the computer system 60 is controlled by operating system software that includes a file management system, such as a disk operating system, which is part of the operating system software. One example of an operating system software with its associated file management system software is the Windows® Operating System, including the workstation and server versions. The file management system of such an operating system is typically stored in the non-volatile storage 74 and causes the processor 64 to execute the various acts required by the operating system to input and output data and to store data in memory, including storing files on the non-volatile storage 74.

### System Level Overview

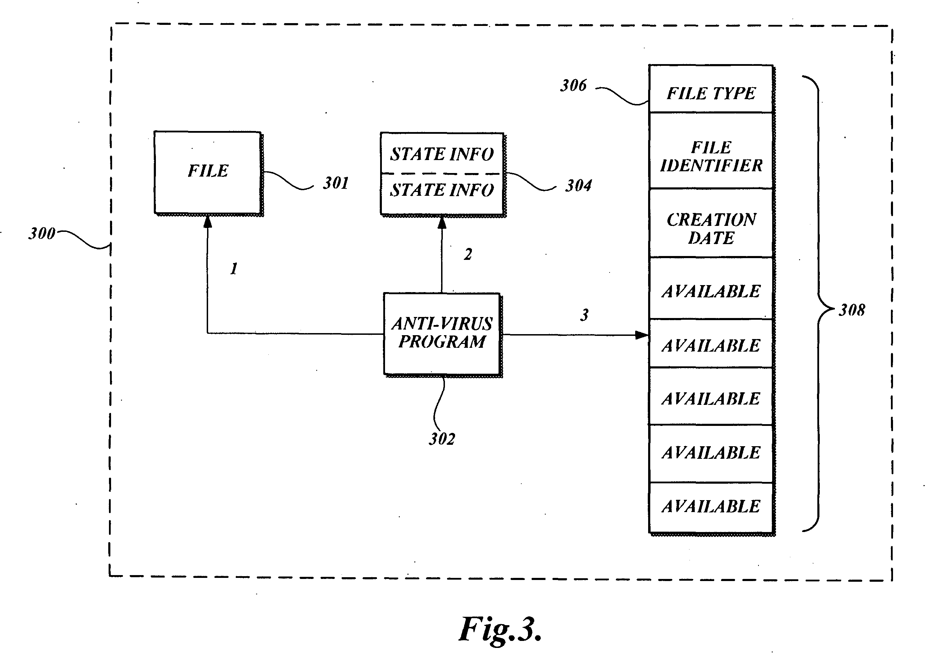

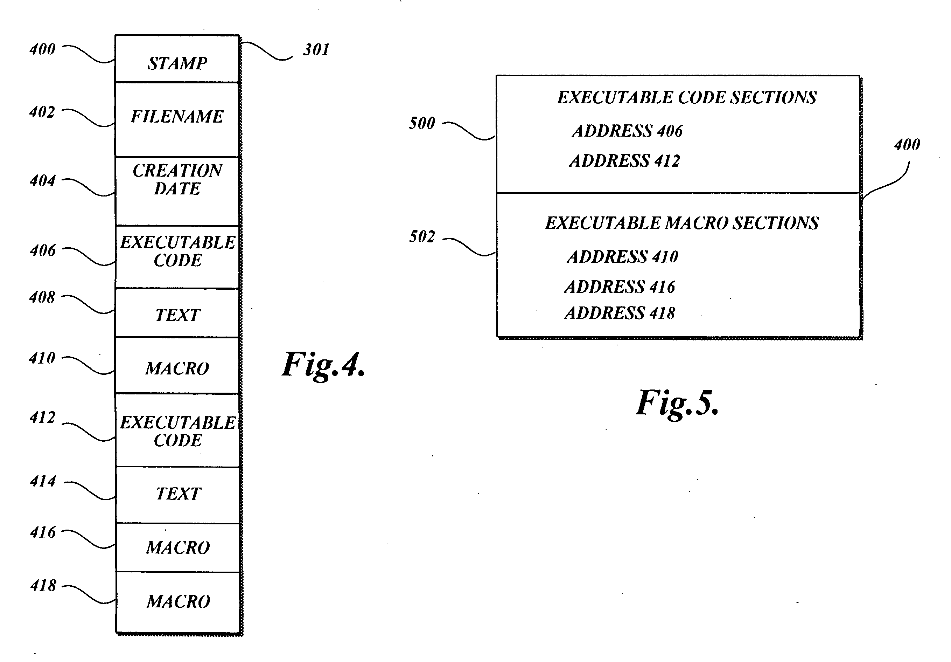

A system level overview of the operation of the exemplary embodiments of the present invention is described by reference to FIGURES 3 and 4. As is illustrated in FIGURE 3, an anti-virus program 302 may be incorporated in a computer, such as a server computer 14 of FIGURE 1, or a client device, such as the client devices 24, 28, 36 and 38. A file system, included as part of the operating system as discussed previously in conjunction with FIGURE 2, controls access to the files stored in non-volatile storage, such as the non-volatile storage 74 illustrated in FIGURE 2.

FIGURE 3 illustrates a file system 300 that includes the use of an anti-virus program 302. The file system 300 maintains an entry data structure directory 306 for each file 301. The entry data structure directory 306 holds information about each file 301, such as file type, file identifier, creation date, etc. This information is stored in various fields 308 of the entry data structure directory 306. Although only one file 301 is illustrated in FIGURE 3, it is appreciated by those of ordinary skill in the art that multiple files may also be incorporated in the file system 300.

When the file 301 is created by, used or otherwise accessed by the file system 300, the anti-virus program 302 will scan 1 the file 301 for known viruses. The anti-virus program 302 then stores 2 AV state information related to the file 301 in one or more database entries 304, which are associated with the anti-virus program 302. As is understood by those of ordinary skill in the art, this AV state information 304 may be in encrypted form to protect it from malicious modification by viruses or the like. The anti-virus program 302 simultaneously, in writing the state information 304, interfaces 3 with the entry data structure directory 306 to obtain information related to the file 301. This information may include the file type, the file identifier, the creation date, etc. This information is included with the state information 304 in order to aid the anti-virus program 302 in making a determination as to when and how often the file 301 should be scanned for viruses. For example, if the creation date of the file 301 has changed since the anti-virus program 302 last scanned the file 301, the anti-virus program 302 makes this determination by comparing the state information with the creation date stored in the entry data structure directory 306. If this comparison shows a difference, then the anti-virus program 302 will scan the file 301 at the particular time this determination is made. As those of ordinary skill in the art are aware, the anti-virus program 302 may make a determination to scan the file 301 for other reasons other than the file's creation date. For example, a direct scan of the file 301, where the creation data is also stored, may be made to determine if the anti-virus program 302 should proceed with scanning the file 301 for viruses.

FIGURE 4 illustrates the structure of the file 301 illustrated in FIGURE 3. As is illustrated, the file 301 includes a stamp (discussed hereinafter) and additional information 402-418 that allows the file system 300 to access and use the file 301 as needed by operating system requirements and/or other software application requirements. A file name section 402 of the file 301 is designed to hold the file name of the file 301. The field 404 is an area designated to hold the creation date of the file 301. The additional fields 406-418 make up the actual data content of the file 301.

Field sections 406 and 412 include executable code that may be infected by malware or other computer viruses. The field sections 410, 416 and 418 include macro entries that may also be infected by malware or other computer-related viruses. The field sections 408 and 414 include plain text, which is generally unaffected by malware and computer-related viruses. The structure of file 301 illustrated in FIGURE 4 is shown by way of example only. In particular, as those of ordinary skill in the art are aware, the structure of files may vary greatly. In particular, some files may not include the text or macro sections illustrated in the figure. Instead, files may be composed of the file identifiers (402 and 404) and the rest of the file may be made up of exclusively executable code. Multiple other file types and structures are similarly understood by those of ordinary skill in the art.

FIGURE 5 illustrates the body of the stamp 400 illustrated in FIGURE 4. The stamp 400 includes an executable code section 500 and an executable macro section 502. The executable code section 500 includes the address locations of the executable code contained in the file 301. In this case, address 406 and address 412 are identified in the executable code section 500. Similarly, the executable macro section 502 includes the address locations of the macros contained in the file 301. In this case, the addresses 410, 416 and 418 are identified in the executable macro section 502.

As was discussed previously, conventional anti-virus programs are generally required to understand the structure of a particular file type before it can be scanned efficiently. In particular, the anti-virus program should understand the address locations of the executable code, the macros, and other file address locations that may be inundated with malware or other computer-related viruses. Generally the developers of the anti-virus are required to reverse engineer the file type structure of the file to find the specific locations where malware or other computer-related viruses may reside. If the structure of a particular file is not understood, the anti-virus program may have to scan the entire file, including those address areas that are unaffected by malware and other computer-related viruses. Obviously, this is not an efficient way to scan any given file for computer-related viruses.

The stamp 400 according to an exemplary embodiment of the present invention rectifies the problems discussed above. That is, an anti-virus program, such as the anti-virus program 302, simply has to review the contents of the stamp 400 before a file, such as the file 301, is scanned for the presence of computer-related viruses.

### Methods of the Exemplary Embodiments of the Present Invention

In the previous section, a system level overview of the operations of exemplary embodiments of the present invention was described. In this section, the particular methods of the exemplary embodiments of the present invention are described in terms of computer software with reference to a series of flowcharts. The methods may be performed by a computer that includes computer programs made up of computer-executable instructions. Describing the methods of the exemplary embodiments by reference to a flowchart enables one of ordinary skill in the art to develop such programs including such instructions to carry out the methods on suitably configured computers (the processor or the computer executing the instructions from computer-readable media). If written in a programming language conforming to a recognized standard, such instructions can be executed on a variety of hardware platforms and for interface to a variety of operating systems.

The exemplary embodiments of the present invention are not described with reference to any particular programming language. It is appreciated that a variety of programming languages may be used to implement the teachings of the present invention as described herein. Furthermore, it is common in the art to speak of software, in one form or another (e.g., program, process, procedure, application, or the like), as taking an action or causing the result. Such expressions are merely a shorthand way of saying that execution of the software by a computer causes the processor of the computer to perform an action or produce a result.

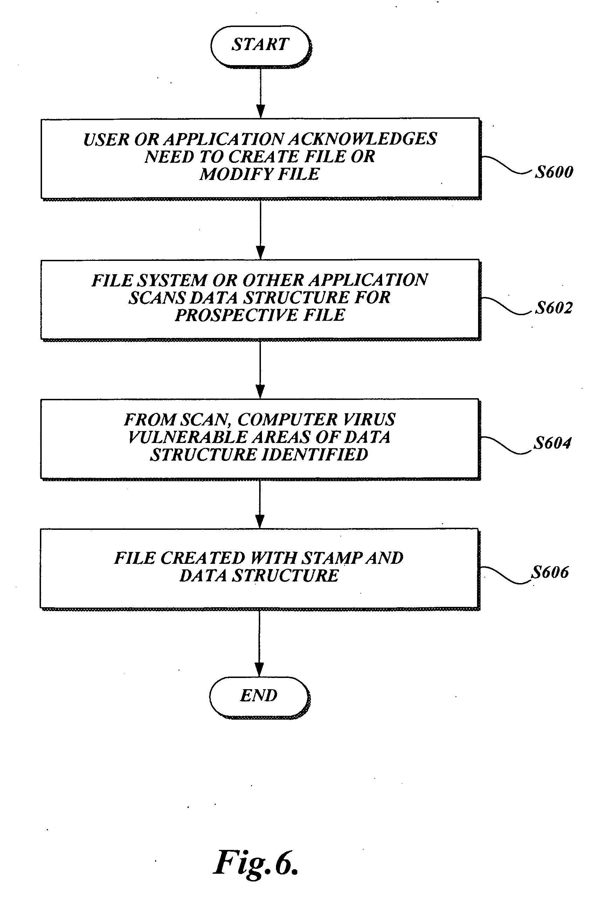

FIGURE 6 illustrates a flowchart for creating a file that includes a stamp 400 in accordance with an exemplary embodiment of the present invention. It should be clear that the process illustrated by way of the flowchart of FIGURE 6 may operate with any of the embodiments described in conjunction with FIGURES 1-5. When an acknowledgment is made that a file must be created and/or modified (S600), a file system or other software application will scan the data structure for the prospective file (S602). The scan of the data structure is designed to determine those areas of the data structure that potentially may be invaded by computer-related viruses (S604). In particular, as was discussed in the prior sections, these areas generally include executable code and/or executable macros. However, other data contained in files may also be susceptible to computer-related viruses. Once these specific vulnerable areas of the data structure for the prospective file are identified, a file is created that includes a stamp that is associated with the representative data structure (S606). This stamp will identify the portions of the data structure that are vulnerable to computer-related viruses and which should be analyzed by an anti-virus program if a scan of the file is deemed as necessary.

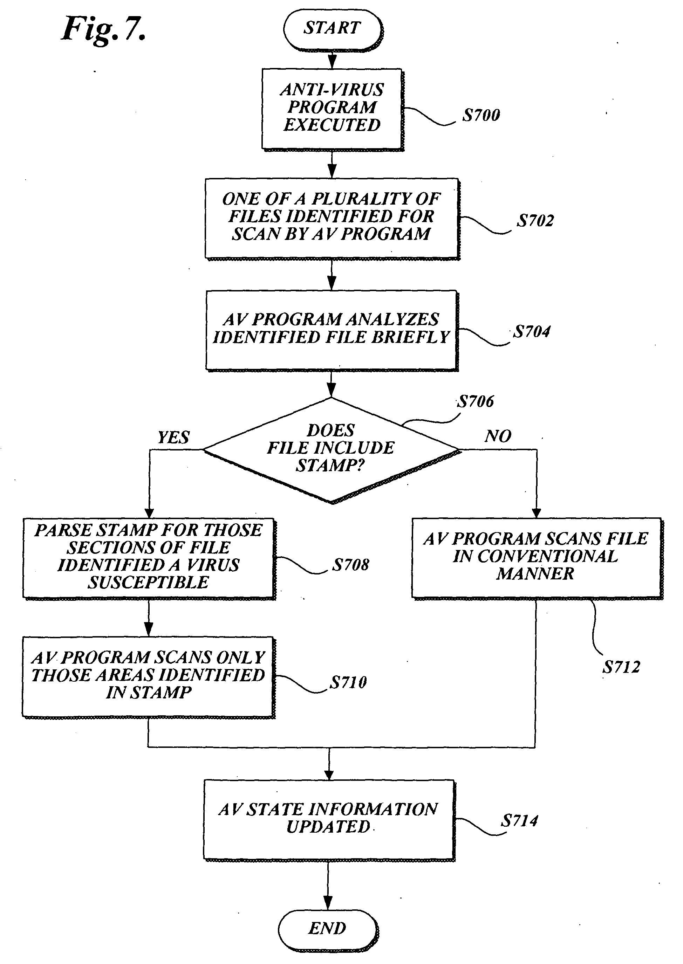

FIGURE 7 illustrates a flowchart of a process that may be used to scan files that include the stamp 400 in accordance with an exemplary embodiment of the present invention. After an anti-virus program is executed (S700), whether by user interaction or by way of a prescheduled event, at least one of a plurality of files may be identified as requiring scanning by the AV program (S702). Once the file is identified, the AV program briefly analyzes the file (S704). If the analyzed file includes a stamp (S706), the stamp is parsed to determine those sections of the file that have been identified as virus susceptible (S708). As discussed previously, sections of a file that are virus susceptible generally include executable code or macros. Only those sections identified as virus susceptible are scanned by the AV program (S710). If the identified file does not include a stamp, the AV program will scan the file in a conventional manner (S712). The scanning method in accordance with the conventional manner may include having to scan all contents contained within the identified file. Regardless of the manner by which the identified file is scanned, once the scan is complete, the AV state information related to the scanned file is updated within the file system in order to substantially prevent unnecessary scanning of files that have not been modified since the previous scan of the AV program (S714).

## Claims

1. A method of scanning a file by an antivirus program, comprising:
creating (S606) a computer file having data associated therewith wherein creating (S606) includes:
evaluating (S602) the data associated with the computer file by a file system to determine those data that may be corrupted by at least one computer related virus;
generating (S606) a stamp that includes at least one address location of the data that is determined as computer related virus corruptible, wherein the stamp is an integral part of the computer file;
determining (S706) whether the computer file includes the stamp;
if the computer file includes the stamp,
parsing (S708) the stamp for the address locations of the data that is determined as computer related virus corruptible; and
scanning (S710) the computer file for compute related viruses in accordance with the stamp included in the computer file, the stamp identifying address locations of data sections in the computer file that are susceptible to infection by computer related viruses, wherein only those address locations identified by the stamp are scanned for computer related viruses; and
if the computer file does not include a stamp,
scanning (S712) all contents of the computer file in a conventional manner.

2. The method according to Claim 1, wherein the data associated with the computer file is evaluated to determine if it contains executable code or macro instructions.

3. The method according to Claim 1, further comprising reading the contents of the stamp to determine a location of data in the computer file that is determined as computer related virus corruptible.

4. The method according to Claim 1, wherein the stamp is created and associated with the file at a time the file is created.

5. The method according to Claim 1, wherein the stamp is created and associated with the file after the file is created.

6. The method according to Claim 1, further comprising removing viruses located in the identified address locations, if any such viruses are found.

7. The method according to Claim 1, wherein the address locations identified in the stamp are address locations in the file that are associated with executable computer code.

8. The method according to Claim 1, wherein the address locations identified in the stamp are address locations in the file that are associated with macros.

9. The method according to Claim 1, wherein the address locations identified in the stamp are address locations in the file that are associated with executable computer code and macros.

10. An article of manufacture for use in programming a processor, the article of manufacture comprising at least one computer readable storage device including at least one computer program embedded therein that causes the processor to perform the method of one of Claims 1 to 9.

## Patentansprüche

1. Verfahren zum Scannen einer Datei durch ein Antivirusprogramm, wobei das Verfahren umfasst:
Erzeugen (S606) einer Computerdatei, die mit dieser verknüpfte Daten hat, wobei Erzeugen (S606) umfasst:
Auswerten (S602) der mit der Computerdatei verknüpften Daten durch ein Dateisystem, um diejenigen Daten zu ermitteln, die durch mindestens einen computerbezogenen Virus korrumpiert werden können;
Erzeugen (S606) eines Stempels, der mindestens eine Adressangabe der Daten, die als durch einen computerbezogenen Virus korrumpierbar ermittelt wurden, umfasst, wobei der Stempel ein integraler Teil der Computerdatei ist;
Ermitteln (S706), ob die Computerdatei den Stempel umfasst;
wenn die Computerdatei den Stempel umfasst,
Analysieren (S708) des Stempels auf die Adressangaben der Daten hin, die als durch einen computerbezogenen Virus korrumpierbar ermittelt wurden; und
Scannen (S710) der Computerdatei nach computerbezogenen Viren gemäß des Stempels der in der Computerdatei enthalten ist, wobei der Stempel Adressangaben von Datensektionen in der Computerdatei angibt, die für eine Infektion durch computerbezogene Viren empfänglich sind, wobei nur diejenigen Adressangaben, die in dem Stempel angegeben sind, nach computerbezogenen Viren gescannt werden; und
wenn die Computerdatei keinen Stempel umfasst,
Scannen (S712) sämtlicher Inhalte der Computerdatei in einer herkömmlichen Art und Weise.

2. Verfahren gemäß Anspruch 1, wobei die Daten, die mit der Computerdatei verknüpft sind, ausgewertet werden, um zu ermitteln, ob diese ausführbaren Code oder Makroinstruktionen beinhalten.

3. Verfahren gemäß Anspruch 1, des Weiteren umfassend Lesen des Inhalts des Stempels, um einen Ort von Daten in der Computerdatei zu ermitteln, die als durch einen computerbezogenen Virus korrumpierbar ermittelt wurden.

4. Verfahren gemäß Anspruch 1, wobei der Stempel zu dem Zeitpunkt erzeugt und mit der Datei verknüpft wird, an dem die Datei erzeugt wird.

5. Verfahren gemäß Anspruch 1, wobei der Stempel erzeugt und mit der Datei verknüpft wird, nachdem die Datei erzeugt wird.

6. Verfahren gemäß Anspruch 1, des Weiteren umfassend Entfernen von Viren, die sich an den ermittelten Adressangaben befinden, wenn solche Viren gefunden werden.

7. Verfahren gemäß Anspruch 1, wobei die Adressangaben, die in dem Stempel angegeben sind, Adressangaben in der Datei sind, die mit einem ausführbaren Computercode verknüpft sind.

8. Verfahren gemäß Anspruch 1, wobei die Adressangaben, die in dem Stempel angegeben sind, Adressangaben in der Datei sind, die mit Makros verknüpft sind.

9. Verfahren gemäß Anspruch 1, wobei die Adressangaben, die in dem Stempel angegeben sind, Adressangaben in der Datei sind, die mit ausführbarem Computercode und Makros verknüpft sind.

10. Herstellungsartikel zur Benutzung zum Programmieren eines Prozessors, wobei der Herstellungsartikel mindestens ein computerlesbares Speichergerät umfasst, das mindestens ein Computerprogramm beinhaltet, das in diesem eingebettet ist, welches den Prozessor veranlasst, das Verfahren gemäß einem der Ansprüche 1 bis 9 auszuführen.

## Revendications

1. Procédé pour scanner un fichier à l'aide d'un programme antivirus, comprenant les étapes qui consistent :
à créer (S606) un fichier informatique auquel sont associées des données, cette création (S606) comprenant elle-même les étapes qui consistent :
à évaluer (S602) les données associées au fichier informatique, à l'aide d'un système de fichier, pour déterminer les données qui peuvent être altérées par au moins un virus informatique ;
à générer (S606) une estampille contenant au moins un emplacement d'adresse des données qui est déterminé comme altérable par un virus informatique, l'estampille faisant partie intégrante du fichier informatique ;
à déterminer (S706) si le fichier informatique contient l'estampille ;
si le fichier informatique contient l'estampille,
à analyser (S708) l'estampille pour rechercher les emplacements d'adresses des données qui sont déterminés comme altérables par un virus informatique ; et
à scanner (S710) le fichier informatique pour rechercher des virus informatiques selon l'estampille contenue dans le fichier informatique, l'estampille identifiant les emplacements d'adresses de sections de données, dans le fichier informatique, qui sont susceptibles d'être contaminés par des virus informatiques, étant précisé que seuls les emplacements d'adresses identifiés par l'estampille sont scannés pour une recherche de virus informatiques ; et
si le fichier informatique ne contient pas d'estampille,
à scanner (S712) tout le contenu du fichier informatique d'une manière classique.

2. Procédé selon la revendication 1, selon lequel les données associées au fichier informatique sont évaluées pour déterminer si elles contiennent un code ou des macro-instructions exécutables.

3. Procédé selon la revendication 1, comprenant aussi la lecture du contenu de l'estampille pour déterminer un emplacement de données, dans le fichier informatique, qui est déterminé comme altérable par des virus informatiques.

4. Procédé selon la revendication 1, selon lequel l'estampille est créée et est associée au fichier à un moment où le fichier est créé.

5. Procédé selon la revendication 1, selon lequel l'estampille est créée et est associée au fichier après que le fichier a été créé.

6. Procédé selon la revendication 1, comprenant aussi l'élimination de virus qui se trouvent dans les emplacements d'adresses identifiés, si de tels virus sont trouvés.

7. Procédé selon la revendication 1, selon lequel les emplacements d'adresses identifiés dans l'estampille sont des emplacements d'adresses, dans le fichier, qui sont associés à un code informatique exécutable.

8. Procédé selon la revendication 1, selon lequel les emplacements d'adresses identifiés dans l'estampille sont des emplacements d'adresses, dans le fichier, qui sont associés à des macros.

9. Procédé selon la revendication 1, selon lequel les emplacements d'adresses identifiés dans l'estampille sont des emplacements d'adresses, dans le fichier, qui sont associés à un code informatique exécutable et à des macros.

10. Produit manufacturé à utiliser pour programmer un processeur, comprenant au moins un dispositif de stockage lisible par ordinateur contenant au moins un programme informatique intégré dans celui-ci, qui amène le processeur à mettre en oeuvre le procédé de l'un des revendications 1 à 9.
